Europäisches Patentamt

European Patent Office

Office européen des brevets

(11) Publication number: **0 267 164**
A2

# EUROPEAN PATENT APPLICATION

(21) Application number: **87830383.3**

(22) Date of filing: **29.10.87**

(51) Int. Cl.⁴: **G 02 B 23/08**
**G 02 B 23/12**

(30) Priority: **30.10.86 IT 4860086**

(43) Date of publication of application:
**11.05.88 Bulletin 88/19**

(84) Designated Contracting States:
**AT BE CH DE ES FR GB IT LI NL SE**

(71) Applicant: **SOCIETA M.E.S. MECCANICA PER L'ELETTRONICA E SERVOMECCANISMI S.p.a.**
**78, Via di Vannina**
**I-00156 Rome (IT)**

(72) Inventor: **Vollono, Vincenzo, Ing.**
**56, Via Filippo Antonio Gualterio**
**I-00139 Rome (IT)**

(74) Representative: **Cioncoloni, Enrico, Dr.Proc.**
**Studio Consulenza Brevetti 76, Via F. Turati**
**I-00185 Rome (IT)**

Die Bezeichnung der Erfindung wurde geändert (Richtlinien für die Prüfung im EPA, A-III, 7.3).

(54) **Periscope device adaptable for day/night vision.**

(57) A compound electro-opticalscope which is exemplified as particularly suitable for motor-vehicles when the body structure of this latter does not allow the driver a direct view of environment and things along the way, comprising: an optical instrument (A) fastened on and through the body top in a settled position, which is provided with optical glasses and mirrors so arranged that the driver may get a view from a level above that of his eyes, such optical instrument so fastened being used alone for seeing by diurnal time; and an optical instrument (B) which carries out an episcopic function and is connectible to or detachable from said instrument (A) easily and snugly. Such episcope (B) when connected to esoscope (A) receives by nocturnal time the visual radiations which are coming out from the outlet optical glass of this latter to be passed through an intensifier (13) and then to an ocular (14) so arranged that also by nocturnal time or when the lighting is very poor the driver may get a clear view by his eye (OS), no replacement between these two component instruments being necessary.

FIG.3

EP 0 267 164 A2

# Description

## COMPOUND ELECTRO-OPTICALSCOPE WITH INTERCONNECTIBLE OPTICAL INSTRUMENTS WHICH MAKE THINGS VISIBLE DURING DIURNAL and NOCTURNAL TIME

The present invention relates to a compound electro-opticalscope which may, for example, be useful and suitable for motor-vehicles when the body structure of these latter does not allow the driver a direct view of environment and things along the run-way, as the driver is placed lower than the plane of image radiations to be received. This electro-opticalscope comprises: an optical instrument having an esoscopic function, which is fastened on and through the top of the body in a fixed position for seeing outer things during the diurnal time; and an optical instrument having an episcopic function, this latter being connectible to the former so that it may pass the visual radiations coming out from the esoscopic instrument during nocturnal time, focalize and intensify same and then pass further such radiations through an objective to be seen very clearly by the viewer also during such a nocturnal time.

The prior art has shown and diffused some types of optical instruments having an esoscopic function, the mirrors and lenses of which are so arranged that a viewer may get a view as from a level above that of his eyes. A typical and well known optical instrument which carries out this function is a periscope which allows to scan along the horizon round, without any change of position of the viewer eyes. By referring to motor-vehicles as premised, such esoscopic instrument is mounted at a defined position on and through the top of the body, so that the driver may get a view of the environment and objects along the run-way of the motor-vehicle in diurnal conditions of visibility, from his driving place inside the motor-vehicle.

By nocturnal conditions of visibility the use of an episcope is provided which is again to be mounted on and through the top of the body in place of above cited esoscope. The episcopic instrument, already known in the art of projecting images of dark objects by intensifying frontally the luminous radiation of same, is also provided in the field of above cited motor-vehicles, as the driver is in this sase interested in a clear vision also by nocturnal time. The arrangement of the component members of such a prior episcope is so made that it is possible to collimate the images relating to the outside of the motor-vehicle along the run-way of same, intensify their radiance, and pass to the eyes of the driver the well defined images coming out from the objective of the episcope by such a condition of nocturnal visibility.

According to the prior art it is then necessary to use independently an esoscope for diurnal observation and an episcope for nocturnal observation, each optical instrument being mounted temporarily on and through the top of such a motor-vehicle body in accordance with the diurnal or nocturnal observation to be carried out.

The prior art provided also the independent use of an episcope by the viewer when some other observation is to be made by noc turnal time. For this purpose this instrument is provided with a means to support same upon the head of the operator, for example of the headset type.

Main object of the present invention is to improve and render easier and more advantageous the use of two optical instruments one of which has only an esoscopic function for seeing by diurnal time and the other an episcopic function for seeing during nocturnal time, the two instruments being so arranged that are forming a single compound electro-opticalscope which comprises: a first esoscopic instrument to carry out observation during diurnal time, which is mounted on and through the top of the body of a motor-vehicle wherein such a type of optical instrument must, for example, be used because of the particular body structure of same; and a second episcopic instrument for seeing during nocturnal time, which is connectible on or detachable from the first one, this latter being fastened in its suitable position.

An example of embodiment is described hereafter reference being made to the accompanying drawings, in order to better evidence the features of the invention and give to a person skilled in the art the possibility of deducing the advantages of a compound electro-opticalscope as claimed, the novel characteristics being resumed as follows:
- use a convention optical instrument generally indicated here as esoscope which is fastened in a fixed position on and through the top of a motor-vehicle body the structure of which does not let the driver have a normal direct vision of the outer environment and objects along the run-way from his driving position also by diurnal time, or when the outer lighting could be sufficient for seeing, this vision being however possible by such esoscope because the mirrors and lenses of same are arranged to reflect a view down a tube so that the drive may actually get a view as from a level above that of his eyes;
- use a conventional episcope easily and snugly connectible to such esoscopic instrument or detachable therefrom, so that in a connecting condition therebetween the visual radiations coming out from the esoscope pass through the component members of the episcope and make then clearly visible to the eye of the driver in his internal driving position the outer images also by nocturnal time or when the lighting conditions are very poor.

In the drawings:

Fig.1 is a schematic view of an esoscope shown with similarity with a well known periscope the visual field of same being however limited to the environment and objects along the run-way of a motor-vehicle in front of the driver;

Fig.2 is a schematic view wherein the esoscope of Fig.1 is connected to a conventional episcope as an example of embodiment of the present invention, the episcopic instrument being shown in a block view;

Fig.3 is a schematic view of a compound electro-opticalscope in accordance with this invention, wherein the episcope is more detailed.

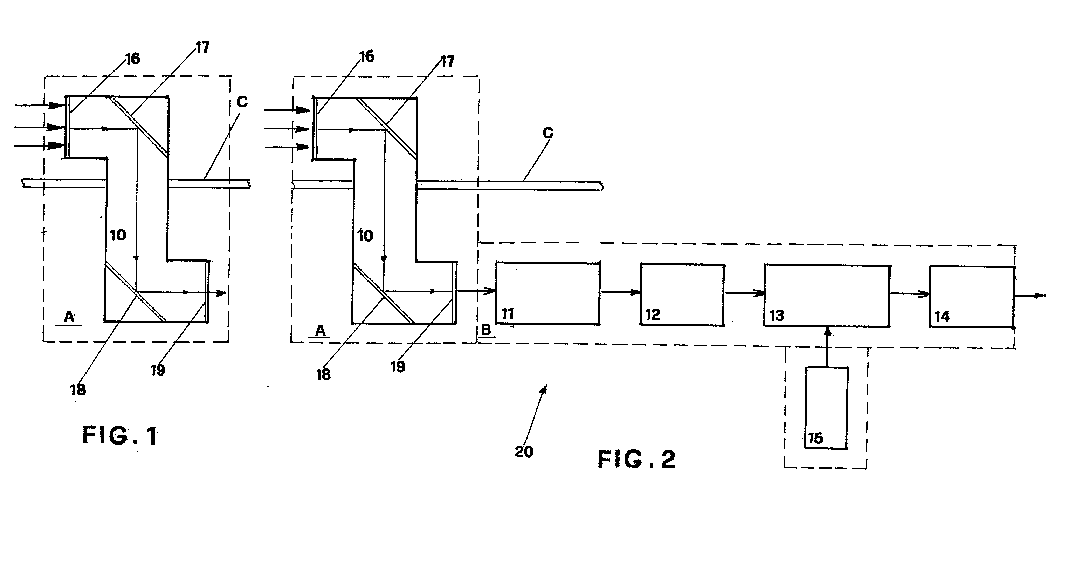

Turning now the examination of the drawings and first of all to Figs.1 and 2 it is possible to see that a short outline only of body top C is shown in order to evidence the difference of level between the visual radiations entering the esoscopic instru ment and the coming out of same to be seen by the driver seated at his driving place.

In accordance with this example of embodiment the compound electro-optical scope comprises two optical instruments indicated by reference characters A and B. Optical instrument A indicated here as an esoscopic instrument as said above, is often used to get from the inside of a motor-vehicle a view of the outer images along the run-way of the motor-vehicle, when the field of observation is lighted in diurnal time or in a condition of visibility which allows the driver to see same with naked eye. The optical instrument, indicated by reference numeral 10, comprises by itself an inlet optical glass 16 to receive the visual radiations and pass them to an inclined mirror 17 which reflects, in turn, the received rays on a faced inclined mirror 18 at a lower level to be further reflected and then passed through an outlet optical glass 19, so that they may finally be seen by the driver.

This so limited optical instrument 10 may then carry out its function by diurnal time as desired and already exploited in accordance with prior art, the improvement as claimed in this invenvention being however to be attributed to the fastening of same in a fixed position on and through the top of the motor-vehicle body structure as well as to its constructive feature particularly referred to the possibility of connecting thereto in a detachable manner the second optical instrument B.

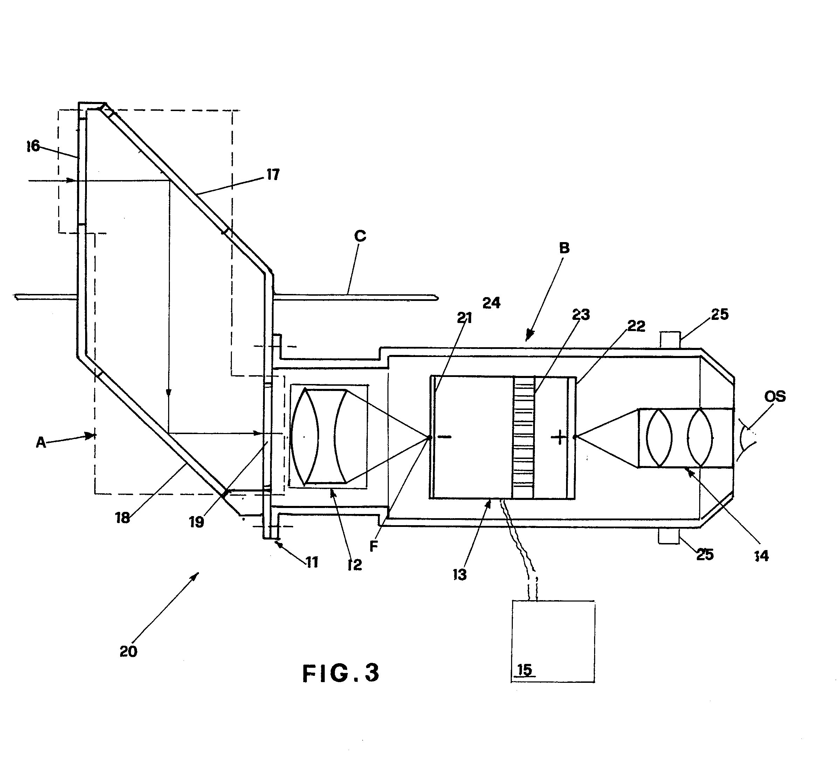

Before proceeding, it is however to point out that only to semplify the schematic illustration of this compound electro-opticalscope the outlet optical glass 19 of instrument A was supposed and shown parallel to inlet optical glass 16, while generally a downwards inclination of about 30° is to be preferred, as the visual radiations coming out from the outlet optical glass 19 could morrectly be directed to the eye of the driver in his driving place. This consideration is obviously to be made also for episcope B of Figs.2 and 3, the axial line of the component members of this latter giving the right direction of the visual radiations coming out from the compound instrument towards the eye OS of the driver.

As already premised and repeated each one of the two optical instruments A and B which are connectible to form a compound electro-opticalscope to be used for scanning by diurnal or nocturnal time in accordance with the invention, is substantially of a conventional type to carry out its peculiar function. Differently from the prior art, however, the first esoscopic instrument A which carries out the function of receiving, reflecting and transmitting the visual radiations by diurnal time will here have a functional continuation by means of episcope B with its component members connected to the former to carry out nocturnal observations. Episcope B comprises: an objective 12, a radiance intensifier 13 and an ocular 14 through which the viewer eye may observe the visual images of the outer environment and things along the run-way of the motor-vehicle by nocturnal time. That is to say, no replacement is to be made between optical instruments A an B, but only an easily and snugly connection of B to A.

An episcope is often used to show images of frontally lighted dark objects. In this case it has the feature of making visible to the viewer the image radiations coming out from otlet optical glass 19. Objective 12 focalizes to F the radiations on the cathode 21 of an intensifying tube 13 and because of its constituting material - generally silver oxide or cesium and silver oxide - cathode 21 sends electrons in tube 13 when the necessa ry difference of voltage in respect with anode 22. By a source of 2.5 V with transformer, for example, it is possible to reach a voltage difference of about 6 kV. As shown in Fig.3 sch-ematically, radiance intensifler 13 comprises a plate 23 provided with microchannels suitably covered to improve the intensifying capability of tube 13, as they discharge, in turn, secondary electrons.

It is important to point out that in Fig.3 the connection between optical instrument A, generally indicated as an esoscope, particularly suitable for seeing by diurnal time and give the driver a good driving safety, and optical instrument B, i.e. an episcope to drive by nocturnal time with like driving safety, or when the lighting is very poor, was schematized as indicated by reference numeral 11. It is obvious that such a connection must have a constructive feature suitable to easily and snugly connect B to A or detache the former from the latter, by bearing in mind the claimed important characteristic of this invention, namely the fastening at a fixed position on and through the body top, of optical instrument A so that the driver may get a view as from a level above that of his eyes by diurnal time, or connect B to A for like finality by nocturnal time.

A suitable connection may, for example, be provided by using a tubular coupling wherein the fore end of instrument B may be slided on or within, or slided and rotated up to a satisfying joint therebetween.

It should be well understood by the skilled in the art that an embodiment of compound electro-opticalscope as exemplified above by referring to the accompanying drawings has following main characteristics:

1. Use said optical instrument A fastened in a settled position on and through the body top of a motor-vehlcle as optical instrument generally indicated here as esoscope provided with mirrors and optical glasses arranged to reflect the images of things down a tube when the body structure does not allow the driver a direct vision, so that the driver may continuously get by diurnal time the desired clear view of environment and things before the motor-vehicle along the way as from a level above that of his eyes;

2. Connect episcope B to said first optical instrument A and use the visual radiations coming out from outlet optical glass 19 of this latter as inlet visual radiations coaxially passed through the component members of said connected episcope B and suitably intensified in order to be seen by the driver eye OS by nocturnal time;

3. Detach said episcope B from esoscope A when a direct seeing of environment and things before the motor-vehicle is desired along the way and is possible because a sufficient opening of the body top allows the driver to stand erect and carry episcope B on his head by using a suitable means, eg of the headset type, episcope B being then used alone by nocturnal time.

### Claims

1. Compound electro-opticalscope (20) exemplified as particularly suitable for motor-vehicles the body structure of which prevents the driver from seeing directly images of environment and things along the way, provided with an esoscopic instrument to see by diurnal time and an episcopic instrument to see by nocturnal time, **characterized** in that comprises:
- a first optical instrument (A) generally indicated as esoscope, fastened in a settled position on and through top (C) of said motor-vehicle body structure to receive visual radiations from environment and things along the way through inlet optical glass (16), reflect them through mirrors (17,18) at different level from each other to made void said prevention of the body structure and pass then the reflected visual radiations through outlet optical glass (19) so that they may be seen by the driver seated on his driving place as from a level above that of his eyes, by diurnal time;
- a second optical instrument, namely an episcope (B) connectible to or detachable from said esoscopic instrument (A), which when connected to this latter receives by nocturnal time said visual radiations coming out from said outlet optical glass (19) and passes then through its component members (12, 13, 14), wherein objective (12) focalizes to (F) the radiations on cathode (21) of intensifying tube (13) from which these latter pass to ocular (14) to be seen by the driver eye (OS) during said nocturnal time or when the light is very poor.

2. A compound electro-opticalscope (20) as claimed in claim 1. **characterized** in that while formed by optical instruments which may be of a conventionsl type, comprises: said first esoscopic instrument (A) fastened in a settled position on and through top (C) of the body structure of a motor-vehicle, the function of which is that of receiving, reflecting and then transmitting through its optical system (16,17,18,19) the visual radiations coming in by inlet optical glass (16) along the way of the motor-vehicle by diurnal time and coming out from outlet optical glass (19) so that the driver may get from his driving place a clear view as from a level above that of his eyes; and said episcope (B) to be connected to said esoscope (A) for receiving through its objective (12) the visual radiations which by nocturnal time are coming out from said optical glass (19) of said optical instrument (A), intensifying same by said electronic intensifying tube (13) and passing then to eye (OS) of the viewer-driver the final clear images through ocular (14) as outlet component member of episcope (B).

3. A compound electro-opticalscope as claimed in claim 1 **characterized** in that said component (B) which carries out an episcopic function may be detached from component (A) which carries out an esoscopic function and remains in its settled position on and through top (C) of the body structure, in order to be used independently for observing by nocturnal time when a sufficient opening through body top (C) allows the driver to stand erect from the inside of said motor-vehicle and be provided with the detached episcope (B) on his head by a suitable means, eg of the headset type.

0267164

FIG.1

FIG.2

FIG.3